Europäisches Patentamt

European Patent Office

Office européen des brevets

(11) Publication number: **0 241 299**
**A2**

# (12) EUROPEAN PATENT APPLICATION

(21) Application number: 87303129.8

(22) Date of filing: 10.04.87

(51) Int. Cl.4: **B 01 J 2/14**

(30) Priority: 11.04.86 GB 8608820

(43) Date of publication of application:
14.10.87 Bulletin 87/42

(84) Designated Contracting States:
AT BE CH DE ES FR GB GR IT LI LU NL SE

(71) Applicant: **IMPERIAL COLOUR MASTERBATCHES LIMITED**
**Unit 2, West Side Jackson Street Industrial Est.**
**St. Helens, WA9 3AT Merseyside (GB)**

(72) Inventor: **Russell, Derek Barry**
**11 Linton Road**
**Hillside Southport (GB)**

(74) Representative: **Ajello, Michael John et al**
**38a Bramhall Lane South**
**Bramhall Stockport Cheshire SK7 1AH (GB)**

(54) Masterbatch production.

(57) A method of and apparatus for producing a wax-based masterbatch, in which a blended compound of wax and pigment is thoroughly mixed and heated in a high speed mixer (11) and then dispensed into a container (15) whose base is formed as a die having a multiplicity of apertures through which the compound may pass to fall freely as droplets through a distance of some 3 to 6 metres. This causes the formation of pellets during descent into a cooling water bath (16) from which they are removed and dried on a conveyor belt (17).

FIG.1

## Description

## MASTERBATCH PRODUCTION

THIS INVENTION concerns the production of wax-based colouring masterbatches for use particularly, though not exclusively, in pigment dispersion when moulding and extruding articles from thermoplastics.

A masterbatch for the plastics industry consists of a composition of pigment and a carrier, the latter usually being polymer-specific or wax-based. The process according to this invention is for the production of wax-based masterbatches which are made conventionally by producing a blend of pigment and wax which is heated to melt flow temperatures and then extruded in strand or sheet form, and subsequently cut or broken into small pieces of a manageable size. This process is costly, and the final product is unmanageable in many subsequent plastics moulding processes.

An object of the present invention is to provide an improved method of and apparatus for producing wax-based masterbatches in manageable pelletised form by a procedure involving considerably less mechanical work when compared with conventional processes.

According to the present invention there is provided a method of producing a wax-based masterbatch comprising the steps of forming a blended compound of wax and pigment, heating same to melt flow temperature, feeding the blended and heated compound through a die having a multiplicity of apertures from which droplets, so formed, are permitted to fall freely through a distance sufficient to cause the formation of pellets during descent, and finally permitting the pellets to cool.

An embodiment of the invention will now be described, by way of example only, with reference to the accompanying drawings in which:-

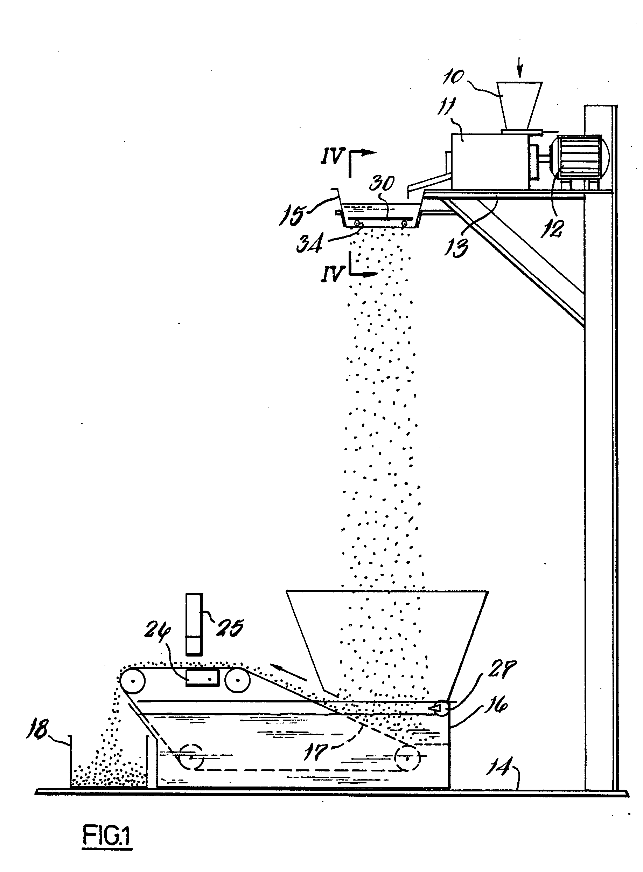

Fig. 1 illustrates schematically a form of apparatus for producing wax-based masterbatches in pelletised form in accordance with the invention;

Fig. 2 is an enlarged cross-sectional view of a single die nozzle;

Fig. 3 is a similar view of a die nozzle and feeding means;

and Fig. 4 is a vertical section taken on line IV-IV of Fig. I.

A wax-based masterbatch is produced by supplying, via an inlet chute 10 to a high speed mixer 11, three or more separate ingredients comprising predominantly a wax such as a polyethylene or amide wax, a sterate and a required pigment in powder form. The wax represents no greater than 5% by weight of the composition, and preferably 3% or less.

In the mixer 11 the ingredients are heated to melt flow temperature and thoroughly mixed mechanically to form a uniform blend. The mixer 11 with its drive motor 12 is mounted on a platform 13 located at a height of between 3m and 6m above floor level 14, and optimally about 4 metres.

The heated compound is batch-fed into a container 15 the base of which forms a die plate defining a multiplicity of apertures, each 3mm or less in diameter with their centres separated uniformly by a distance of between 10mm and 18mm.

Thus the wax based compound is permitted to pass through the apertures and fall freely as discrete droplets into a cooling water tank 16 located on the floor below. During descent, the droplets of compound naturally form into round smooth-surfaced pellets which become durable upon cooling in the water tank 16. They are removed from the tank by a foraminous conveying belt 17 from which the water drains back into the tank and the resultant pellets are collected in a container 18.

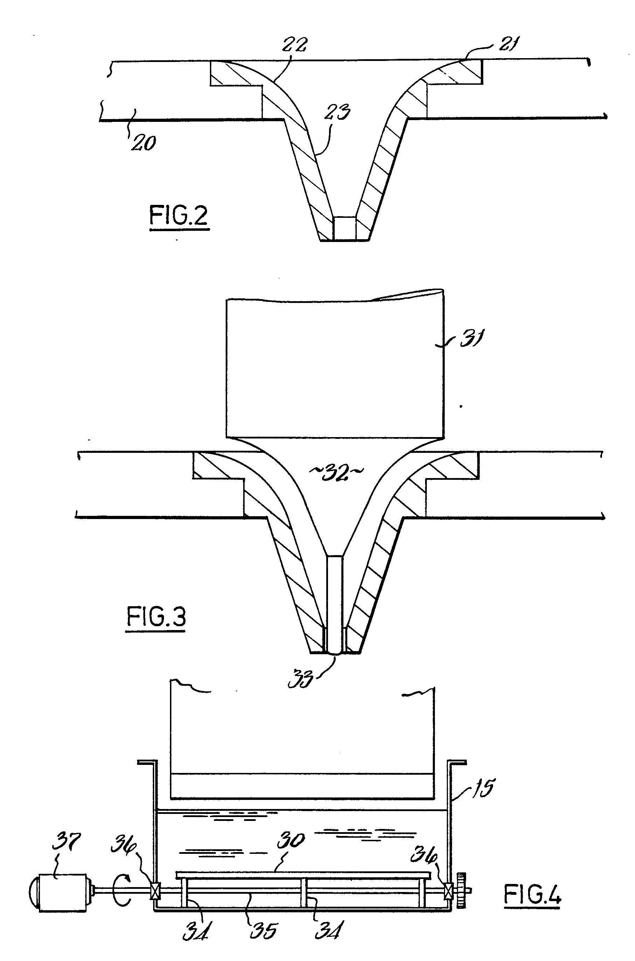

The method is enhanced by provision of certain apparatus features which have been found to improve the shape and other physical characteristics of the pellets produced. In Fig. 2, the base of container 15 is illustrated by way of a die plate 20 which may be heated uniformly such as by induction heating or it may be of a material having naturally high conductivity such as Copper or Berillium Copper thus to ensure a constant temperature across the plate, and the die apertures are provided by a uniform array of brass nozzles 21 pressed into die plate 20.

The nozzles 21 are placed with their axes separated by a distance in the range 10mm to 18mm, and to ensure an even and controlled flow rate of compound through the nozzles the internal configuration thereof is composed of a generally bell-mouthed introductory portion 22 giving way smoothly to an inverted conically tapered portion 23 of about 4mm in drop length and with a wall inclination of some 15 degrees from the central vertical axis. At a distance of between 0.02mm and 1mm above the base of the nozzle, its central passage becomes cylindrical as at 24. The portion 24 serves as a dwell zone to reduce the velocity of the compound passing through it and its diameter is preferably in the range of 1.5mm to 1.8mm. Finally, the external shape of each nozzle is cut back at a steep angle to prevent compound from tracking upwardly along the outside surface by capillary action.

Referring again to Fig. I, there is positioned above the conveyor 17 an air knife 25 which blows hot air downwardly onto the pellets on the surface of the belt to dry them, whilst below the belt 17 a suction device 26 serves to draw water from the pellets downwardly through the interstices of the belt. Thus, the pellets emerge at the output end of conveyor belt 17 in a substantially dry state. If required, a second belt conveyor (not shown) may be positioned below the output end of belt 17, and the pellets may pass along the second belt through a drying tunnel (not shown) into which heated air is introduced.

Within the tank 16 and close to the surface of the water there is provided a water sparge tube 27 which extends across the tank and directs a curtain of water horizontally towards the left-hand end in Fig. I thus to move the surface of the water and any pellets floating thereon, towards the belt. An alternative to a sparge tube might be a paddle wheel rotating on or close to the surface, again to direct the water in the surface region, towards the belt.

In the production of wax-based masterbatches in accordance with this invention, if the ratio of pigment to wax is increased as might be required in some instances, then the compound in the container I5 becomes correspondingly more viscous and may indeed become thixotropic in which case it is unlikely to fall freely from the nozzles 2I. In this case, it will be necessary to pump or positively dispense the compound from the nozzles in a controlled manner.

For this purpose, and referring now to Figs. 3 and 4 of the drawings there is provided above die plate 20 a second similar plate 30 perforated as plate 20, but to receive, instead of nozzles 2I, an equal number of pins 3I at the base of each of which there is a tapered portion 32 which in turn leads to a lowermost cylindrical portion 33.

As can be clearly seen in Fig. 3, when plate 30 and pins 3I are lowered, the cylindrical portions 33 and tapered portions 32 of the pins pass downwardly through nozzles 2I forcing compound from the nozzles. The cylindrical portion 33 of each pin is a clearance fit within the cylindrical portion 24 of each nozzle. For example, if the diameter of nozzle portion 24 is I.8mm then the diameter of pin portion 33 will be approximately I.6mm.

As can be seen from Fig. 4, plate 30 is located within guides (not shown) in container I5 and is oscillated vertically at a rate of approximately two cycles per second and through a height of approximately 3mm by a series of cams 34 rotatably mounted on each of a pair of shafts 35 themselves rotatably mounted in container I5 via sealed bearings 36. Preferably a pair of cam shafts 35 are driven by a common pinion (not shown) drivably connected to a variable speed motor 37 whose operation can be adjusted to select the frequency of oscillation of pins 3I relative to nozzles 2I.

The movement of plate 30 and pins 3I within the container I5 also causes sufficient movement of the compound to prevent it from setting prematurely, and the cylindrical pin portions 33 ensure that the nozzles remain clear.

In some instances it may be appropriate to remove plate 30 and pins 3I with their associated drive mechanism, particularly when the pigment to wax ratio of the compound is low so that the compound readily flows through the nozzles.

The container I5 may be replaced by an annular or elongate vessel such as a length of pipe having perforations in its lower region.

This method is advantageous over conventional methods using extrusion, since considerably less energy is required, the pellets forming naturally due to passage of the molten compound through the air. The pellets are smooth surfaced, substantially uniform in size, and entirely ready for use as a finished masterbatch.

## Claims

I. A method of producing a wax-based masterbatch comprising the steps of forming a blended compound of wax and pigment, heating same to melt flow temperature, feeding the blended and heated compound through a die having a multiplicity of apertures from which droplets, so formed are permitted to fall freely through a distance sufficient to cause the formation of pellets during descent, and finally permitting the pellets to cool.

2. A method according to Claim I, in which the blended and heated compound is fed through the die by gravity and is permitted to fall through a distance of between 3m and 6m into a cooling water tank from which they are removed and dried as substantially uniform pellets.

3. A method according to Claim I, wherein the compound is fed through the die by means of an oscillating pump whose stroke dispenses a uniform volume of compound from each die aperture.

5. Apparatus for producing a wax-based masterbatch comprising a mixer in which a compound of wax and pigment is thoroughly mixed and heated to melt flow temperature, a container into which the blended and heated compound is fed from the mixer, the base of the container comprising a die having a multiplicity of apertures through which the compound is permitted to fall freely as droplets through a distance of between 3m and 6m into means for cooling the so formed pellets.

6. Apparatus according to Claim 5, in which said means for cooling the pellets is a cooling water tank having conveying means therein upon which the pellets are removed from the water and dried, means for moving the surface region of the water towards the conveying means, and air operated drying means associated with the conveying means for drying the pellets thereon.

7. Apparatus according to Claim 5 or Claim 6, in which said die comprises a die plate with a uniform array of said apertures therein, into each of which is pressed a dispensing nozzle extending through the plate and depending therefrom, the internal wall surface of said dispensing nozzle comprising an upper introductory bell-mouth portion giving way to an inverted conically tapering portion at the base of which is a cylindrical portion leading to the outlet.

8. Apparatus according to Claim 7, wherein the angle of inclination of the inverted conical wall portion of said nozzle is at an angle of, or in the region of, I5° with respect to the central axis of passage through the nozzle.

9. Apparatus according to Claim 7, including a second plate mounted above the die plate and carrying a multiplicity of depending pins each aligned with one of the nozzles in said die plate, the second plate being connected to drive means to cause same to oscillate vertically such that the pins descend into and through the nozzles, positively to dispense the compound therefrom, a lower portion of each pin being tapered to conform to the internal wall surface of the associated dispensing nozzle.

10. Apparatus according to Claim 9, wherein the second plate is oscillated vertically by abutment of a series of cams mounted on a pair of driven shafts drivingly connected to a variable speed motor.

11. Apparatus according to Claim 7, wherein the die apertures are spaced apart by a distance in the region of 10mm to 18mm; wherein the diameter of each die aperture is in the region of 0.8mm to 2.5mm; and wherein the depth of the cylindrical portion of each nozzle is in the region of 0.2mm to 1mm.

12. Apparatus according to any one of Claims 5 to 15, wherein the base of said container is of a material having naturally high thermal conductivity to ensure an even temperature distribution across the plate.

0241299

FIG.1

FIG.2

FIG.3

FIG.4